# EUROPÄISCHE PATENTSCHRIFT

(11) **EP 1 478 125 B1**
(45) Veröffentlichungstag und Bekanntmachung des Hinweises auf die Patenterteilung: **13.06.2007**
(21) Anmeldenummer: 03010816.1
(22) Anmeldetag: 14.05.2003
(51) Int. Cl.: H04L 12/26, H04L 12/40

(54) **System zum Monitoren mindestens einer Telekommunikationsverbindung**
Monitoring system for at least one telecommunication connection
Système de contrôle pour au moins une connection de télécommunication

(43) Veröffentlichungstag der Anmeldung: 17.11.2004
(73) Patentinhaber: Tektronix International Sales GmbH, 8212 Neuhausen (CH)
(72) Erfinder: Thiele, Ingo, 12045 Berlin (DE)
(74) Vertreter: Schurack, Eduard F.

(56) Entgegenhaltungen:
- US-A- 6 108 342
- US-A1- 2003 018 780
- US-A1- 2003 101 261

## Beschreibung

Die vorliegende Erfindung betrifft ein System zum Monitoren mindestens einer Telekommunikationsverbindung mit mindestens einem Weiterverarbeitungsrechner, der einen ersten Prozessor, eine ersten Anschluss für ein Speichermedium und ein erstes Systembus-Interface umfasst, einem ersten Speichermedium, das mit dem Anschluss für ein Speichermedium des Weiterverarbeitungsrechners verbunden ist, mindestens einer Messkarte, die einen zweiten Prozessor, ein zweites Systembus-Interface sowie mindestens ein erstes Line-Interface zum Verbinden mit einer Telekommunikationsverbindung umfasst, und einem Systembus, mit dem das erste Systembus-Interface des Weiterverarbeitungsrechners und das zweite Systembus-Interface der mindestens einen Messkarte verbunden sind.

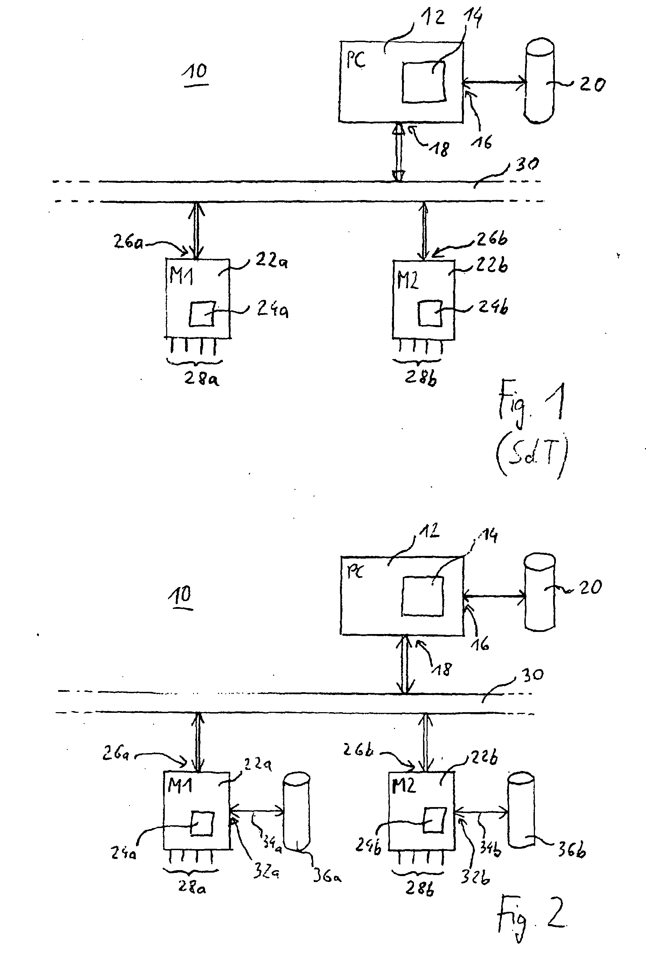

Ein derartiges System ist aus dem Stand der Technik bekannt und in Figur 1 dargestellt, wobei das System das Bezugszeichen 10 trägt. Der Weiterverarbeitungsrechner ist mit 12, dessen Prozessor mit 14, dessen Anschluss für ein Speichermedium mit 16 und dessen Systembus-Interface mit 18 bezeichnet. Das erste Speichermedium ist mit 20 bezeichnet, die Messkarten mit 22a und 22b, deren jeweiliger Prozessor mit 24a und 24b, deren Systembus-Interface mit 26a bzw. 26b und deren Line-Interfaces mit 28a bzw. 28b. Der Systembus trägt das Bezugszeichen 30.

Bei diesem bekannten System treten bisweilen mehrere Probleme auf: Zur Speicherung von Daten auf dem Speichermedium 20 müssen an den Line-Interfaces 28a, 28b eingehende Daten über den Prozessor 24a, 24b der jeweiligen Messkarte 22a, 22b an den Prozessor 14 des PCs 12 übertragen werden. Falls der PC-Prozessor 14 zu diesem Zeitpunkt mit einer anderen Funktion beschäftigt ist, scheitert diese Datenübergabe und der jeweilige Prozessor 24, 24b der jeweiligen Messkarte 22a, 22b wird durch diesen Vorgang belegt und kann daher für andere Funktionen, beispielsweise die Entgegennahme weiterer auf den Line-Interfaces 28a, 28b eingehender Daten nicht ermöglichen. Weiterhin ist eine Übertragung von Daten von den Messkartenprozessoren 24a, 24b zum Prozessor 14 des PCs 12 nur mit maximal der Datenrate möglich, die vom Systembus 30 vorgegeben ist. Zu berücksichtigen ist auch, dass der Prozessor 14 des PCs 12 gewöhnlich ein Multi-Tasking-System ist und daher andere darauf ablaufende Prozesse Rechenleistung verbrauchen, die damit nicht für die Aufzeichnung von Daten, die über die Line-Interfaces 28, 28b empfangen werden, zur Verfügung steht. Umgekehrt wird die Rechenleistung des Prozessors 14 des PCs 12 eingeschränkt durch seine Aktivitäten im Rahmen der Messdatenerfassung, so dass nur eine reduzierte Rechenleistung für andere Prozesse zur Verfügung steht. Intensiviert werden diese Probleme außerdem dadurch, dass bei einem Monitoring-Vorgang gewöhnlich 4 bis 8 Messkarten mit jeweils mindestens 4 Line-Interfaces beteiligt sind. Eine Vergrößerung der PC-Rechenleistung löst das Problem nicht, da dann die anderen genannten Probleme zum Zug kommen, beispielsweise die vom Systembus maximal zu bewältigende Datenrate. Bei einem gängigen System wäre beispielsweise eine Übertragungsrate von 120 Megabit pro Sekunde des Systembusses nötig, tatsächlich realisieren lassen sich jedoch meist nur ca. 80 Megabit pro Sekunde. Dies resultiert gegenwärtig in einem Datenverlust. Besonders gravierend macht sich dies bemerkbar in Initialisierungs- und Abbruchphasen von Telekommunikationsverbindungen.

Aus der US 2002/0181654 ist bekannt, Echtzeitdaten auf einem Host-Computer zu speichern, der mit dem Detektor über einen sogenannten Computer- Communication-Bus verbunden ist. Damit werden die Daten nicht von der Instanz gespeichert, die die Daten empfängt. Insofern besteht keine direkte Busverbindung zwischen der Datenempfangseinheit und der Datenspeichereinheit.

Aus der US 2002/0131767 ist ein Datenrekorder bekannt, der als Rekorder für eine optische Diskette oder eine Festplatte ausgebildet sein kann. Die Erfindung beschreibt einen Weg, wie Daten formatiert werden können und wie sie auf einen derartigen Datenträger geschrieben werden. Ähnliche Vorrichtungen sind bekannt aus den Patenten US 6,480,666 und US 6,377,518.

Die US 2002/027977 beschreibt ebenfalls ein System, das über ein Netzwerk mit einer Datenaufzeichnungsvorrichtung verbunden ist. Das bedeutet, dass auch hier die Datenaufzeichnungsvorrichtung nicht auf demselben Hardware-Modul sitzt wie die Datenempfangsvorrichtung und damit ein Systembus bzw. ein Netzwerk zwischen diesen beiden Einheiten angeordnet ist.

Aus der US 6,035,351 ist eine Software bekannt, die mit einem Benutzer interagiert. Der Benutzer kann einige Parameter spezifizieren, beispielsweise die Priorität der Datenrate. Gemäß diesen Parametern bestimmt die Software wo und wie ein gegebenes File auf eine Festplatte geschrieben wird.

Schließlich beschreibt die US 5,751,883 einen Weg, wie Multimedia-Daten formatiert und auf einem Direktzugriffsspeichersystem gespeichert werden können. Die Daten werden von einem Multimediaserver geliefert. Es besteht keine Notwendigkeit, den Datentransfer in Echtzeit abzuwickeln, vielmehr können die zu übertragenen Daten von dem Multimediaserver gemäß der Aufzeichnungsgeschwindigkeit des Speichersystems angefordert werden.

Ferner sei noch auf die US 2003/0018780 verwiesen, die ein Verfahren und eine Vorrichtung zur Verwaltung von Netzwerkgeräten offenbart. Aus dieser Druckschrift geht ein System hervor, das aus mehreren LANs besteht, die zusammen ein WAN bilden. An ein LAN ist eine Netzwerkkarte über eine LAN-Schnittstelle angeschlossen. Die Netzwerkkarte ist außerdem mit einem Drucker verbunden. Außerdem sind mehrere Personal Computer sowie ein Server, an den ein Speichermedium angeschlossen ist, mit dem LAN verbunden. Über MODEM-Router und einen Backbone ist das LAN mit anderen LANs verbunden.

Nach alledem liegt der vorliegenden Erfindung die Aufgabe zu Grunde, ein System der eingangs genannten Art derart weiterzubilden, dass die bei dem aus dem Stand der Technik bekannten System auftretenden Probleme und Nachteile zuverlässig vermieden werden. Insbesondere soll die Speicherung von den auf den Telekommunikationsverbindungen eingehenden Daten bis zu möglichst hohen Bit-Raten ohne Datenverlust ermöglicht werden.

Diese Aufgabe wird gelöst mit einem System mit den Merkmalen von Patentanspruch 1.

Die vorliegende Erfindung beruht auf der Erkenntnis, dass die oben genannten Probleme vermieden werden können, wenn anstelle das dem PC zugeordneten Speichermediums den Messkarten unter Umgehung des Systembusses direkt ein Speichermedium zugeordnet wird, auf das diese die über den Line-Interfaces eingehenden Daten speichern können. Von dort können sie dann zu zeitunkritischen Zeitpunkten zur weiteren Verarbeitung an den PC weitergeleitet werden. Diese Lösung hat weiterhin den Vorteil, das nur ein Prozessor an der Datenspeicherung beteiligt ist und damit keine Synchronisation zwischen zwei Prozessoren herzustellen ist. Damit wird das Nadelöhr, der Systembus mit seiner niedrigen Datenrate, zuverlässig umgangen. Die Verbindung zwischen Speichermedium und Messkarte wird durch einen I/O-Bus bewirkt, der überdies höhere Datenraten zulässt als ein Systembus. Insbesondere schreibt auf den jeweiligen I/O-Bus nur ein Prozessor, so dass die Gefahr unglücklicher Konstellationen, beispielsweise wenn bei der aus dem Stand der Technik bekannten Vorrichtung gleichzeitig mehrere Messkarten versuchen Daten an den Prozessor des PCs zu liefern, zuverlässig vermieden werden kann. Insbesondere können auf einem I/O-Bus in Folge der reduzierten Teilnehmerzahl, die daran angeschlossen ist, einfachere und damit schnellere Protokolle zur Datenübertragung verwendet werden. Weiter Vorteile ergeben sich daraus, dass das Speichermedium nur für die Aufzeichnung der empfangenen Daten zur Verfügung steht. Demzufolge ist eine bessere Kontrolle des verfügbaren Speicherplatzes möglich. Es existieren keine um den Speicherplatz konkurrierenden Prozesse.

Eine bevorzugte Ausführungsform der vorliegenden Erfindung zeichnet sich dadurch aus, dass die mindestens eine Messkarte als ein sogenanntes embedded System realisiert ist. Unter einem embedded System ist ein Komplettrechner auf einer Platine zu verstehen, der einen Prozessor, ein I/O-System sowie einen Arbeitsspeicher umfasst. Derartige Systeme werden nach außen gewöhnlich nicht sichtbar und finden sich in vielerlei Geräten wieder, z.B. in einem Fotokopierer, in einem Fernsehgerät usw. Sie sind daher kommerziell günstig erhältlich.

Gegenwärtig kommt als Systembus insbesondere ein VME- oder ein cPCI-Bus in Betracht. Selbstverständlich ist die vorliegende Erfindung auch mit zukünftigen System-Bussen eines anderen Standards verwendbar. Der I/O-Bus ist vorzugsweise als ATA-, als IDE-, als fibre channel- oder als SCSI-Bus realisiert. Auch hier gilt, dass selbstverständlich die Erfindung mit zukünftigen I/O-Bussen gemäß mit anderer Standards ebenfalls zum erfindungsgemäßen Erfolg führt.

Um den Aufwand gering zu halten, kann vorgesehen werden, dass bei einem System, das mehrere Messkarten aufweist, mindestens zwei Messkarten mit einem gemeinsamen zweiten Speichermedium verbunden sind. Umgekehrt kann bei einem System, das mehrere Messkarten aufweist, vorgesehen werden, dass mindestens zwei Messkarten mit mindestens einem nur ihnen zugeordneten zweiten Speichermedium verbunden sind. Insbesondere ist darauf hinzuweisen, dass beispielsweise bei einem ATA-Bus zwei Festplatten anschließbar sind und bei einem SCSI-Bus sogar 16. Damit können die vom erfindungsgemäßen System maximal zu verarbeitenden Bit-Raten noch weiter erhöht werden.

Die Messkarten weisen bevorzugt mindestens zwei, noch bevorzugter mindestens vier Line-Interfaces zum Verbinden mit Telekommunikationsverbindungen auf. Es kann vorgesehen werden, dass jedem Line-Interface mindestens ein zweites Speichermedium zugeordnet ist. Bevorzugt ist das zweite Speichermedium eine Festplatte, die Verwendung anderer Arten von Speichermedien, beispielsweise einer optischen Disk, eines Bandlaufwerks etc. kommt selbstverständlich auch in Betracht. Für diese Lösung ist es besonders vorteilhaft, wenn anstelle des Anschlusses für das zweite Speichermedium auf dem Trägerbord jedes einzelne Line-Interface mit einem solchen Anschluss für ein Speichermedium ausgestattet wird. Somit kann jedes Line-Interface seine eingehenden Daten selbst speichern. Dem Trägerbord der Messkarte wird dann die Aufgabe zugeordnet, diese Daten dem PC zugänglich zu machen.

Weitere vorteilhafte Ausführungsformen können den Unteransprüchen entnommen werden.

Im Nachfolgenden wird ein Ausführungsbeispiel der vorliegenden Erfindung unter Bezugnahme auf die beigefügten Zeichnungen näher beschrieben. Es zeigen:
- Figur 1: ein aus dem Stand der Technik bekanntes System zum Monitoren von mindestens einer Telekommunikationsverbindung; und
- Figur 2: ein System zum Monitoren mindestens einer Telekommunikationsverbindung gemäß einem bevorzugten Ausführungsbeispiel der vorliegenden Erfindung.

Bei dem in Figur 2 dargestellten erfindungsgemäßem System zum Monitoren mindestens einer Telekommunikationsverbindung werden die Teile, die dieselben Bezugszeichen tragen wie in Figur 1, nicht nochmals beschrieben. Ihre Funktion ist im Wesentlichen dieselbe.

Bei dem in Figur 2 dargestellten System weist jede Messkarte 22a, 22b mindestens ein I/O-Interface 32a, 32b auf, an dem über einen I/O-Bus 34a, 34b jeweils eine Festplatte 36,a, 36b angeschlossen ist. An Stelle der in Figur 2 dargestellten Ausführungsform können an den I/O-Bus 34a, 34b auch mehrere Festplatten angeschlossen werden. Eine weitere Variante der vorliegenden Erfindung zeichnet sich dadurch aus, dass jedem Line-Interface 28a, 28b ein zweites Speichermedium 36a, 36b zugeordnet ist. Auch kann vorgesehen werden, dass mehrere Messkarten 22a, 22b auf ein und dasselbe zweite Speichermedium 36a, 36b schreiben.

## Patentansprüche

1. System zum Monitoren mindestens einer Telekommunikationsverbindung mit
- mindestens einem Weiterverarbeitungsrechner (12), der einen ersten Prozessor (14), einen ersten Anschluss (16) für ein Speichermedium und ein erstes Systembus-Interface (18) umfasst;
- einem ersten Speichermedium (20), das mit dem Anschluss (16) für ein Speichermedium des Weiterverarbeitungsrechners (12) verbunden ist;
- mindestens einer Messkarte (22a, 22b), die einen zweiten Prozessor (24a, 24b), ein zweites Systembus-Interface (26a, 26b) sowie mindestens ein erstes Line-Interface (28a, 28b) zum Verbinden mit einer Telekommunikationsverbindung umfasst;
- einem Systembus (30), mit dem das erste Systembus-Interface (18) des Weiterverarbeitungsrechners (12) und das zweite Systembus-Interface (26a) der mindestens einen Messkarte (22a, 22b) verbunden sind;
**dadurch gekennzeichnet,**
**dass** das System
- mindestens ein zweites Speichermedium (36a, 36b) umfasst; und
- die mindestens eine Messkarte (22a, 22b) mindestens ein I/O-Intertace (32a, 32b) umfasst, wobei das I/O-Interface (32a, 32b) über einen I/O-Bus (34a, 34b) mit dem zweiten Speichermedium verbunden ist.

2. System nach Anspruch 1,
**dadurch gekennzeichnet,**
**dass** die mindestens eine Messkarte (22a, 22b) als ein embedded system realisiert ist.

3. System nach Anspruch 1 oder 2,
**dadurch gekennzeichnet,**
**dass** der Systembus (30) ein VME-Bus oder ein cPCI-Bus ist

4. System nach einem der vorhergehenden Ansprüche,
**dadurch gekennzeichnet,**
**dass** der I/O-Bus (34a, 34b) ein ATA-, ein IDE, ein fibre channel- oder ein SCSI-Bus ist.

5. System nach einem der vorhergehenden Ansprüche,
**dadurch gekennzeichnet,**
**dass** das System mehrere Messkarten (22a, 22b) aufweist, wobei mindestens zwei Messkarten (22a, 22b) mit einem gemeinsamen zweiten Speichermedium (36) verbunden sind.

6. System nach einem der vorhergehenden Ansprüche,
**dadurch gekennzeichnet,**
**dass** das System mehrere Messkarten (22a, 22b) aufweist, wobei mindestens zwei Messkarten (22a, 22b) mit mindestens einem, nur jeweils ihnen zugeordneten zweiten Speichermedium (36) verbunden sind.

7. System nach einem der vorhergehenden Ansprüche,
**dadurch gekennzeichnet,**
**dass** die Messkarte (36a, 36b) mindestens zwei, bevorzugt mindestens vier, Line-Interfaces (28a, 28b) zum Verbinden mit Telekommunikationsverbindungen aufweist.

8. System nach einem der vorhergehenden Ansprüche,
**dadurch gekennzeichnet,**
**dass** jedem Line-Interface (28a, 28b) ein zweites Speichermedium (36) zugeordnet ist.

9. System nach einem der vorhergehenden Ansprüche,
**dadurch gekennzeichnet,**
**dass** das zweite Speichermedium (36) eine Festplatte ist.

## Claims

1. System for monitoring at least one telecommunication link with
- at least one computer for further processing (12) which comprises a first processor (14), a first connection (16) for a storage medium and a first system bus interface (18);
- a first storage medium (20), which is linked to the connection (16) for a storage medium of the computer for further processing (12);
- at least one measurement board (22a, 22b) which comprises a second processor (24a, 24b), a second system bus interface (26a, 26b) and at least one first line interface (28a, 28b) for linking to a telecommunication link;
- a system bus (30) with which the first system bus interface (18) of the computer for further processing (12) and the second system bus interface (26a) of the at least one measurement board (22a, 22b) are linked;
**characterised in that**
the system
- comprises at least one second storage medium (36a, 36b); and
- the at least one measurement board (22a, 22b) comprises at least one I/O interface (32a, 32b), the I/O interface (32a, 32b) being linked via an I/O bus (34a, 34b) to the second storage medium.

2. System according to claim 1,
**characterised in that**
the at least one measurement board (22a, 22b) is realised as an embedded system.

3. System according to claims 1 or 2,
**characterised in that**
the system bus (30) is a VME bus or a cPCI bus.

4. System according to one of the above claims,
**characterised in that**
the I/O bus (34a, 34b) is an ATA, an IDE, a fibre channel or an SCSI bus.

5. System according to one of the above claims,
**characterised in that**
the system exhibits several measurement boards (22a, 22b), at least two measurement boards (22a, 22b) being linked to a common second storage medium (36).

6. System according to one of the above claims,
**characterised in that**
the system exhibits several measurement boards (22a, 22b), at least two measurement boards (22a, 22b) being linked to at least one second storage medium (36) assigned only to them.

7. System according to one of the above claims,
**characterised in that**
the measurement board (36a, 36b) exhibits at least two, preferably at least four, line interfaces (28a, 28b) for linking to telecommunication links.

8. System according to one of the above claims,
**characterised in that**
each line interface (28a, 28b) is assigned a second storage medium (36).

9. System according to one of the above claims,
**characterised in that**
the second storage medium (36) is a hard disk.

## Revendications

1. Système de surveillance d'au moins une liaison de télécommunication comportant
- au moins un ordinateur de traitement à suivre (12) comprenant un premier processeur (14), un premier raccordement (16) pour un support de stockage et une première interface de bus système (18);
- un premier support de stockage (20) relié au raccordement (16) pour un support de stockage de l'ordinateur de traitement à suivre (12) ;
- au moins une carte de mesure (22a, 22b) qui comprend un deuxième processeur (24a, 24b), une deuxième interface de bus système (26a, 26b), ainsi qu'au moins une première interface de ligne (28a, 28b) à relier à une liaison de télécommunication ;
- un bus système (30) auquel la première interface de bus système (18) de l'ordinateur de traitement à suivre (12) et la deuxième interface de bus système (26a) de la au moins une carte de mesure (22a, 22b) sont reliées ;
**caractérisé en ce que**
le système
- comprend au moins un deuxième support de stockage (36a, 36b) ; et
- que la au moins une carte de mesure (22a, 22b) comprend au moins une interface d'E/S (32a, 32b), l'interface d'E/S (32a, 32b) étant reliée au deuxième support de stockage par un bus d'E/S (34a, 34b).

2. Système selon la revendication 1,
**caractérisé en ce que**
la au moins une carte de mesure (22a, 22b) est réalisée en tant que système intégré.

3. Système selon la revendication 1 ou 2,
**caractérisé en ce que**
le bus système (30) est un bus VME ou cPCI.

4. Système selon l'une quelconque des revendications précédentes,
**caractérisé en ce que**
le bus d'E/S (34a, 34b) est un bus ATA, IDE, SCSI ou canal fibre.

5. Système selon l'une quelconque des revendications précédentes,
**caractérisé en ce que**
le système présente plusieurs cartes de mesure (22a, 22b), au moins deux cartes de mesure (22a, 22b) étant reliées à un deuxième support de stockage (36) commun.

6. Système selon l'une quelconque des revendications précédentes,
**caractérisé en ce que**
le système présente plusieurs cartes de mesure (22a, 22b) au moins deux cartes de mesure (22a, 22b) étant reliées à au moins un deuxième support de stockage (36) leur étant exclusivement affecté.

7. Système selon l'une quelconque des revendications précédentes,
**caractérisé en ce que**
la carte de mesure (36a, 36b) présente deux, de préférence quatre interfaces de ligne (28a, 28b) à relier à des liaisons de télécommunication.

8. Système selon l'une quelconque des revendications précédentes,
**caractérisé en ce que**
un deuxième support de stockage (36) est affecté à chaque interface de ligne (28a, 28b).

9. Système selon l'une quelconque des revendications précédentes,
**caractérisé en ce que**
le deuxième support de stockage (36) est un disque dur.
